# EUROPÄISCHE PATENTSCHRIFT

(11) **EP 2 356 011 B1**
(45) Veröffentlichungstag und Bekanntmachung des Hinweises auf die Patenterteilung: **13.02.2013**
(21) Anmeldenummer: 08874935.3
(22) Anmeldetag: 13.12.2008
(51) Int. Cl.: B62B 9/28

(54) **KINDERWAGEN MIT ZWEITSITZ**
BABY CARRIAGE HAVING SECOND SEAT
VOITURE D'ENFANT MUNIE D'UN SIÈGE AUXILIAIRE

(43) Veröffentlichungstag der Anmeldung: 17.08.2011
(73) Patentinhaber: Kostner, Birgit, 33335 Gütersloh (DE)
(72) Erfinder: Kostner, Birgit, 33335 Gütersloh (DE)
(74) Vertreter: Strauss, Hans-Jochen
(86) Internationale Anmeldenummer: PCT/DE2008/002087
(87) Internationale Veröffentlichungsnummer: WO 2010/066214

(56) Entgegenhaltungen:
- EP-A- 1 325 855
- EP-A- 2 017 159
- DE-U1- 29 517 712
- FR-A- 1 176 546
- NL-C- 92 200
- NL-C- 94 048
- US-A1- 2007 108 710

## Beschreibung

Die Erfindung bezieht sich auf einen Kinderwagen mit Zweitsitzt gemäß dem Oberbegriff von Anspruch 1, wobei der Kinderwagen eine zumindest teilweise horizontale Liegefläche zum Tragen eines ersten Kindes aufweist, die von zwei Seitenwänden begrenzt wird und der Zweitsitz aus einer etwa horizontal verlaufenden Sitzfläche und wenigstens zwei Trägern besteht, die an der Sitzfläche befestigt sind und sich im aktivierten Zustand nach unten bis zur Liegefläche erstrecken und auf der Liegefläche aufliegen.

Bei der Nutzung von Kinderwagen wird oft nicht nur ein erstes kleines Kind transportiert, sondern ein zweites, etwas größeres Kind begleitet den Wagen. Falls das zweite Kind noch zu klein ist, um größere Strecken allein zu gehen, muss es zeitweise transportiert werden. Und dann sind auch Gegenstände wie z. B. Einkäufe, Spielsachen oder andere Hilfsmittel wie Babynahrung und Kleidung mit zu nehmen.

Auf aktuellem Stand der Technik stellt sich das zweite Kind zum zeitweiligen Transport meist auf eine Plattform, die mit ihrer Vorderkante am Kinderwagen montiert wird, und in ihrem rückwärtigen Teil von ein oder zwei zusätzlichen Rädern getragen wird. Das stehende Kind muss sich an der rückwärtigen Kante des Kinderwagens festhalten.

Nachteilig ist, dass sich das zweite Kind selber aufrecht halten muss. Wenn ihm die Kraft seiner Knie versagt, versagt auch die Transportplattform. Durch die Plattform als effektive Verlängerung des Kinderwagens ohne eine entsprechende Verlängerung der Schubstange kann die schiebende Person nicht mehr mit ihrer vollen, natürlichen Schrittlänge gehen, sondern wird zu einem ineffizienten und daher anstrengenden Trippelschritt gezwungen.

Nachteilig ist auch, dass das Kind auf der Plattform keinen Blickkontakt zur schiebenden Person hat. Stattdessen blickt es zum ersten, im Kinderwagen liegenden Kind und beginnt mit ihm womöglich ein nicht gewünschtes Wechselspiel, das zur Fahrtunterbrechung führen kann.

Nachteilig ist auch, dass die Plattform bei Nichtgebrauch nur mit einiger Mühe demontiert werden kann. Sofern am Kinderwagen keine weitere Halterung zur Unterbringung der unbenutzten Plattform vorgesehen ist, ist es in der Praxis meist das geringste Übel, auf eine Demontage der Plattform zu verzichten und die Beschränkung er Schrittlänge in Kauf zu nehmen.

Als Alternative zu den Stehplattformen sind nach aktuellem Stand der Technik auch zusätzliche Sitze für das größere Kind bekannt, die am Kinderwagen befestigt werden. Die meisten Zusatzsitze können jedoch nur recht aufwändig befestigt werden und sind oft nur für wenige oder nur ein einziges Modell eines Kinderwagens geeignet.

Die Europäische Patentanmeldung, EP 1 325 855, Wolstein, beschreibt eine horizontal angeordnete Platte, auf der das zweite Kind oberhalb der Füße des ersten Kindes sitzt. Der Nachteil dieser Platte ist, dass sie auf den Seitenwänden des Kinderwagens aufliegt. Dafür müssen die Seitenwände eine waagerechte Oberkante aufweisen, die zusätzlich noch entsprechend belastbar sein muss.

Anstelle derartiger, sehr stabiler, aber auch sehr gewichtiger und voluminöser Ausführungen von Kinderwagen werden auf aktuellem Stand der Technik zunehmend Leichtbauten oder klappbare Gestelle und Aufbauten bevorzugt, deren Seitenwände meist aus einem Gestänge mit einem flexiblem, z.B. textilem Bezug bestehen und deshalb nicht mit einem nennenswerten Zusatzgewicht belastet werden können.

Das Gebrauchsmuster DE 295 17 712, Schweighart, beschreibt einen Zusatzsitz, der am Grundgestell oder am Haltebügel des Kinderwagens befestigt wird. Nachteilig ist, dass nicht nur die Dimensionen des Zusatzsitzes und seiner Befestigung sondern auch noch die Art der Befestigung auf die jeweilige Bauweise des Kinderwagens abgestimmt werden muss. Dadurch kann ein solcher Zusatzsitz nur für wenige Typen von Kinderwagen genutzt werden.

Falls der Schwerpunkt des Kinderwagens durch die zusätzliche Last des zweiten Sitzes und des zweiten Kindes sehr nahe an eine der beiden Achsen des Kinderwagens verschoben wird, erhöht sich bei Bergauf- oder Bergabfahrt die Gefahr des Kippens. Oberhalb einer maximal möglichen Steigung kippt das gesamte Gefährt zwangsläufig in oder entgegen zur Fahrtrichtung.

Ein weiterer Nachteil bekannter Zusatzsitze ist, dass die Montage meist relativ kompliziert und zeitaufwendig ist. Bei montiertem Zusatzsitz ist das Herausnehmen und das Hereinlegen des ersten, kleineren Kindes zumindest sehr erschwert oder kaum möglich. Bei den meisten Zusatzsitzen wird die zusätzliche Nutzung der Sitzfläche zur Ablage von Gegenständen zusammen mit oder anstatt eines weiteren Kindes nicht weiter unterstützt.

Auf aktuellem Stand der Technik beschreibt die NL 922 00 einen Zweitsitz für Kinderwagen gemäß dem Oberbegriff von Anspruch 1, an dessen Unterseite zwei C-förmige Profile mit einem längs verlaufenden Schlitz befestigt sind. In jedes Profil wird an seinem Ende eine L-förmige Stütze eingesetzt und durch den Schlitz hindurch verschraubt.

Nachteilig ist die hohe Anzahl der einzeln zu befestigenden und zu demontierenden Füße. Ein weiterer Nachteil ist, dass der Nutzer nach der Demontage selbst herausfinden muss, wie er die insgesamt wenigstens fünf Einzelteile - den Sitz und die vier Füße - einlagert und verstaut.

Die Anmeldung FR 1 176 546 beschreibt einen Zweitsitz zum Einsetzen in Kinderwagen, bei dem sich die Sitzfläche auf ein Gestell aus gebogenen Rohren abstützt.

Nachteilig ist, dass dieses Gestell steif und nicht zerlegbar ist und daher bei Nichtgebrauch sehr viel Volumen zur Lagerung beansprucht.

Einen anderen Zweitsitz zum Einsetzen in einen Kinderwagen beschreibt die NL 940 48. Dieser Sitz stützt sich an beiden Seiten auf einen Träger ab. Zusätzlich benötigt er aber noch einen dritten Auflagepunkt auf der Rückwand des Kinderwagens.

Nachteilig ist, dass er durch den dritten Auflagepunkt auf Kinderwagen beschränkt ist, die an ihrer Rückseite eine Rückwand oder zumindest einen Bügel aufweisen müssen, der zumindest mit der Hälfte der vorgesehenen Nutzlast für den Zweitsitz belastbar ist. Die alleinige Aufstellung nur auf der Liegefläche eines Kinderwagens ist deshalb nicht möglich.

Ein weiterer sehr wesentlicher Nachteil ist, dass jeder Träger an seiner Unterseite mit einem quer dazu verlaufenden Stütze verbunden ist, die gegenüber dem Träger nicht beweglich ist und deshalb auch bei einem Verschwenken des Sitzes gegenüber den Träger nicht auf dessen Ober- oder Unterseite gebracht werden kann, sondern weiterhin sperrig davon absteht, sodass Sitz und Träger bei der Unterbringung relativ viel Platz beanspruchen.

Das Ziel der vorliegenden Erfindung ist es, einen Zusatzsitz für einen Kinderwagen zu entwickeln, der nach einfacher und schneller Montage in Verbindung mit vielen verschiedenen Kinderwagen zu verwenden ist und bei Nichtbenutzung einfach und Platz sparend zusammengeklappt und verstaut werden kann.

Dieses Ziel der Erfindung wird durch einen Zweitsitz gemäß dem kennzeichnenden Teil von Anspruch 1 erreicht, dessen Träger gelenkig an der Sitzfläche befestigt sind und im aktivierten Zustand etwa rechtwinklig zur Sitzfläche ausgerichtet sind und durch je einen Feststeller gegen ein Verschwenken in die deaktivierte Position gesichert sind und im deaktivierten Zustand entweder auf die Oberseite oder auf die Unterseite der Sitzfläche verschwenkbar sind.

Grundsätzlich jeder Kinderwagen weist eine zumindest teilweise horizontale Liegefläche zum Tragen eines ersten Kindes auf, die stets im Zentrum des Kinderwagens angeordnet ist und grundsätzlich eine mechanisch relativ hoch belastbare Fläche des gesamten Kinderwagens ist. Die Erfindung nutzt diese Liegefläche zur Aufnahme des Zweitsitzes.

Nur zwei Träger reichen aus, um die Sitzfläche der Zweitsitz zu halten. Im Normalfall stützt sich je ein Träger an der linken und an der rechten Seite des auf der Liegefläche liegenden ersten Kindes ab. Dadurch wird nur ein sehr kleiner Teil der Liegefläche in Anspruch genommen, so dass der Bewegungsspielraum für das erste Kind kaum eingeschränkt wird.

Die Abmessung der Sitzfläche der Zweitsitz ist prinzipiell nicht begrenzt. Jedoch wird sie im Normalfall meist kleiner sein, als die Liegefläche, auf der sie steht. Das hat den Vorteil, dass das erste Kind jederzeit zu einem wesentlichen Teil sichtbar ist und in den Kinderwagen hineingesetzt oder herausgenommen werden kann, ohne zuvor den Zweitsitz herausnehmen zu müssen.

Ein weiterer Vorteil ist, dass der Zweitsitz auch ohne weiteres für die Ablage von Gegenständen genutzt werden kann. Dafür kann es sogar sinnvoll sein, dass er etwas größer als die Sitzfläche ist und über deren Rand hinausragt.

Zumeist wird die Sitzfläche jedoch schmäler als die Liegefläche sein, damit der Zweitsitz schnell und einfach in den Kinderwagen hinein gestellt werden kann und seitlich nicht übersteht. Dadurch bleibt die gewohnte Manövrierfähigkeit des Kinderwagens erhalten.

In einem sehr einfachen Fall besteht der Zweitsitz aus drei flächigen Abschnitten, von denen der mittlere Abschnitt als Sitzfläche dient und die beiden, daran anschließenden Schenkel die Träger des Zweitsitzes sind. Im aktivierten Zustand ruht der Zweitsitz mit den parallel zur Sitzfläche verlaufen Kanten der Träger auf der Liegefläche des Kinderwagens.

Es ist ein kennzeichnendes Merkmal, dass die Träger gelenkig an der Sitzfläche befestigt sind. Dadurch können sie bei Nichtgebrauch, also im deaktivierten Zustand, an die Sitzfläche herangeklappt werden. Dabei können die Träger je nach Ausführung des Gelenkes entweder gegen die Unterseite oder gegen die Oberseite der Sitzfläche geschwenkt werden. Insbesondere, wenn Sitzfläche und Träger aus etwa plattenförmigem Material bestehen, wird der Zweitsitz dadurch von einem vergleichsweise sperrigen Teil zu einem kompakten, etwa quaderförmigen Block verkleinert, der sich viel einfacher hantieren und verstauen lässt.

Es ist ein weiteres kennzeichnendes Merkmal, dass die Träger im aktivierten Zustand etwa rechtwinklig zur Sitzfläche ausgerichtet sind und durch je einen Feststeller gegen ein Verschwenken in die deaktivierte Position gesichert sind. Dabei sind verschiedene Formen des Feststellers möglich.

In einer Variante sind als Feststellfunktion an zwei gegenüberliegenden Kanten der Sitzfläche wenigstens je ein Langloch eingebracht, dass etwa senkrecht zur Sitzfläche ausgerichtet ist. In jedes dieser Langlöcher greift eine Rundachse ein, die an der Oberkante jedes Trägers befestigt ist. Wenn sich die Rundachse im unteren Bereich des Langloches befindet, dient sie als Verschwenkachse für den Träger.

Wenn die Rundachse durch vertikaler Bewegung des Trägers in den oberen Bereich des Langloches verschoben ist, wirkt sie als Gegenhalterung für eine Führungsfläche am Träger, die auf einer Auflagefläche an der Sitzfläche aufliegt und dadurch eine Verschwenkung des jeweiligen Trägers in den Kinderwagen hinein blockiert.

Eine Verschwenkung des Trägers in die andere Richtung, aus dem Kinderwagen heraus, ist durch die Seitenwand des Kinderwagens blockiert.

Falls jedoch die Begrenzung durch die Seitenwand des Kinderwagens nicht ausreicht, kann an der Sitzfläche gegenüber zur Auflagefläche an der Sitzfläche noch eine zweite Auflagefläche geschaffen werden. Zwischen diese beiden Auflageflächen wird der Träger hin ein geschoben, bis er von den Auflageflächen zangenartig umfasst wird und dadurch fixiert ist.

Eine andere Möglichkeit zum Feststellen von Seitenwänden, die im deaktivierten Zustand auf die Oberseite der Sitzfläche verschwenkbar sind und im aktivierten Zustand etwa rechtwinklig zur Sitzfläche ausgerichtet sind ist je ein Anschlag, der an die Sitzfläche angeformt ist und die Träger gegen ein weiteres Verschwenken in Richtung zur Mitte absichert.

Eine andere Variante für den Feststeller ist ein Dreieck, das aus einem Träger heraus schwenkbar ist und dann mit einer Kante an der Unterseite der Sitzfläche anliegt oder ein Rasthaken oder ein Hebel, der in ein dazu komplementäres Gegenstück einrastet. Als Einrastung kann z.B. ein elastischer länglicher Streifen dienen, der an der Unterseite der Sitzfläche befestigt ist und im deaktivierten Zustand durch eine Öffnung im Träger hindurch ragt. Der Träger ist dann gegen die Unterseite der Sitzfläche geschwenkt. Wenn der Träger zwecks Aktivierung gegenüber der Sitzfläche aufgerichtet wird, gleitet der Streifen durch die Öffnung bis sein Ende hinter eine Rastnase in der Öffnung einrastet. Dadurch wird der Träger an einer Bewegung zurück in seine Ausgangsposition gehindert. Gegen ein weiteres Verschwenken ist der Träger durch einen Anschlag gesichert, der an die Sitzfläche angeformt ist. Erst durch einen Druck auf das Ende des elastischen Streifens löst sich dessen Ende wieder von der Rastnase und der Träger kann zurück in seine deaktivierte Position schwenken.

Eine andere Ausführungsform eines Feststellers ist ein Schwenkhebel, der an wenigstens einem der Träger verschwenkbar angebracht ist, und der im aktivierten Zustand so weit verschwenkt wird, dass er mit einem Ende auf einer Andruckfläche unterhalb der Sitzfläche aufliegt oder in einen Schlitz in der Sitzfläche eingreift und dadurch ein Zurückschwenken des Trägers blockiert. Erst wenn der Schwenkhebel die Andruckfläche oder den Schlitz nicht mehr berührt, kann der Träger wieder zurück in seinen passiven Zustand verschwenkt werden.

Als Feststeller für die Rundachse an der Oberkante jedes Trägers kann auch ein Splint oder eine Gabel oder ein Innensechskant oder ein anderes Blockierelement dienen, das in eine dazu komplementäre, axial ausgerichtete Öffnung in der Rundachse eingreift.

Als eine weitere Ausstattungsvariante ist auf der Liegefläche eine Softtasche ausgebreitet, in die das erste Kind hinein gelegt wird. Als nächstes wird der Zweitsitz - im aktivierten Zustand - hinein gestellt, so dass er das erste Kind zu einem Teil tunnelartig überdeckt. Dann wird die Softtasche oberhalb des Zweitsitzes verschlossen.

Zu den Vorteilen der Softtasche zählt, dass sie den Zweitsitz stabilisiert, indem sie für eine zusätzliche Verbindung mit dem ersten Kind sorgt. Außerdem dient sie als Abdeckung für Staub oder anderes, das ansonsten vom zweiten Kind auf dem Zweitsitz auf das erste Kind herunter fallen könnte. Und schließlich fungiert die Softtasche als Auflage für die Unterschenkel des zweiten Kindes.

Als zusätzliche Option kann in die Softtasche eine Polsterung eingearbeitet werden, die nach dem Verschließen der Softtasche auf der Sitzfläche aufliegt. Ein weitere Ausstattungsmöglichkeit sind Befestigungen für einen Haltegurt zum Angurten des zweiten Kindes, mit dem das zweite Kind am Herabfallen gehindert wird.

Wenn die Träger nur so hoch sind, dass sich im aktivierten Zustand des Zweitsitzes die Sitzfläche zwischen den Seitenwänden des Kinderwagens befindet, ist die Sitzfläche der Zweitsitz zwangsläufig nicht breiter als die Liegefläche im Kinderwagen. Dann werden die Seitenwände des Kinderwagens auch für die Sitzfläche als Begrenzung nutzbar. Wegen den vorgenannten Gründen wird in der Praxis die Breite der Sitzfläche zumeist 70% bis 100% der Breite der Liegefläche betragen.

Im Interesse der Standsicherheit des Zweitsitzes und einer möglichst geringen Einschränkung der Bewegungsfreiheit für das erste Kind unten auf der Liegefläche ist es sinnvoll, wenn die Träger des Zweitsitzes zumindest teilweise in der Nähe von oder sogar direkt anliegend an eine der beiden Seitenwände verlaufen. Dann befindet sich je ein Träger auf der rechten und auf der linken Seite des ersten Kindes.

Da die Liegeflächen verschiedener Kinderwagen von verschiedener Breite sein können, ist es eine einfache Möglichkeit zur Anpassung an diese verschiedenen Breiten, dass die Sitzfläche etwas schmäler als die meisten Kinderwagen dimensioniert wird, so dass sie in die meisten Wagen hinein passt. Bei sehr breiten Kinderwagen ergibt sich dann zwischen den Seitenwänden und den Trägern ein Spalt.

Um diesen Spalt zu verkleinern, können Sitzfläche und Träger aus einem elastischen Material wie z.B. Kunststoff gefertigt werden. Die Träger spreizen sich in der Ruheform des Zweitsitzes seitlich etwas von der Senkrechten ab, bilden also einen etwas größeren Winkel als 90° mit der Sitzfläche.

Diese Ausführungsvariante berührt auch bei relativ breiten Kinderwagen die Seitenwände. Bei schmäleren Kinderwagen können die Träger vor dem Einsetzen etwas zusammengedrückt werden, wenn die Sitzfläche aus einem etwas flexiblen Material gefertigt ist. Nach dem Einsetzen in einen Kinderwagen drücken sich die Träger in einer einfachen Ausführungsform gegen die Seitenwände des Kinderwagens. Dadurch findet der Zusatzsitz einen guten Halt und wird in der Mitte des Kinderwagens zentriert.

Falls das Einsetzen mit zusammengedrückten Trägern zu mühsam ist oder falls die Seitenwände des Kinderwagens nicht ausreichend stabil für die Aufnahme des seitlichen Druckes der zurückfedernden Träger sind oder falls sich zwischen den Seitenwänden und der Liegefläche ein Spalt auftut, können die Träger an ihrer Unterkante durch einen Gurt, eine Kette, ein Band, ein Seil oder ein anderes flexibles Teil zusammengezogen werden und in dieser Position durch einen Klettverschluss, einen Haken, eine Schnalle oder eine andere lösbare Verbindung fixiert werden, so dass sie zwischen die Seitenwände passen und einen ausreichenden Halt auf der Liegefläche des Kinderwagens finden.

Für eine noch fester Verbindung zwischen Zweitsitz und Kinderwagen, schlägt die Erfindung vor, dass an der Unterkante wenigstens eines Trägers wenigstens ein Gurt und/oder eine Kette und/oder ein Seil befestigt ist und mit dem anderen, freien Ende am Kinderwagen oder am anderen Träger befestigt wird.

Der Gurt und/oder die Kette und/oder das Seil kann jeweils in der Länge verstellbar sein und am freien Ende kann ein Haken oder ein ähnliches Befestigungselement angebracht werden, das in das Gestell des Kinderwagens oder in eine zum Haken komplementäre Aussparung in anderen Träger der Zweitsitz eingehakt wird .

Im Normalfall liegt das erste Kind mit seiner Längsachse in Fahrtrichtung des Kinderwagens, so dass die Träger des Zweitsitzes parallel zur rechten und linken Seitenwand des Kinderwagens ausgerichtet sind.

Zum Beispiel bei sehr kleinen Kindern und relativ großen Liegeflächen ist es jedoch auch denkbar, dass das erste Kind quer zur Fahrrichtung ausgerichtet ist und dementsprechend auch die Träger der Zweitsitz quer zur Fahrtrichtung orientiert sind. Dann teilt ein Träger des Zweitsitzes die Liegefläche des Kinderwagens in zwei Bereiche.

Wenn die Höhe der Träger größer ist als die größte Höhe des größten liegenden Kindes, zu dessen Transport der Kinderwagen vorgesehen ist, kann die Sitzfläche über das gesamte, erste Kind hinweg reichen oder das erste Kind kann wahlweise mit den Füßen oder mit dem Kopf unter die Sitzfläche gelegt werden.

Die Höhe des Zweitsitzes über der Liegefläche hängt davon ab, ob für das erste Kind freie Bewegungen der Arme und/oder der Beine möglich sein sollen oder nicht. Wenn z.B. ein begrenzter Bewegungsraum für die Beine des Kindes definiert wird, und nur Bauch und Beine unterhalb der Sitzfläche liegen, kann die Höhe der Träger im Extremfall so niedrig wie die Höhe der Beine in liegender Position des Kindes werden. Zum Hineinlegen und zum Herausnehmen des Kindes wird dann in der Regel der Zweitsitz abgehoben werden müssen. In der Praxis wird die Höhe der Träger oft zwischen 10 cm und 30 cm liegen.

In einer einfachen und wirtschaftlich vorteilhaften Bauform bestehen bei einem erfindungsgemäßen Zweitsitz die Sitzfläche und beide Träger jeweils aus plattenförmigem Material. Wenn die beiden Träger jeweils an zwei gegenüberliegenden Kanten der Sitzfläche angeordnet werden, ergibt sich ein zweifach abgewinkelter, U-förmiger Streifen. Ähnlich wie ein Sitzmöbel auf einer Fläche aufgestellt wird, wird auch dieser U-förmige Streifen auf die Liegefläche des Kinderwagens aufgesetzt.

Wenn die Liegefläche des Kinderwagens aus sehr festem Material, wie zum Beispiel einer Platte oder parallelen Streben besteht, kann die Stirnfläche der Träger als Standfläche ausreichen. Wenn der dadurch ausgeübte Druck auf die Liegefläche jedoch zu hoch ist, kann er reduziert werden, indem die Unterkante der beiden Träger jeweils durch wenigstens eine Standplatte vergrößert wird, die parallel zur Sitzfläche verläuft. Dadurch wird die Auflagekraft auf eine größere Fläche verteilt, wodurch die Kraft pro Flächeneinheit, also der Druck, weiter absinkt.

In einer Ausführungsform weist die Standplatte in das Innere des Kinderwagens und ragt unter eine ev. auf der Liegefläche vorhandene Matratze. Dabei ist es sinnvoll, dass die Dicke der Standplatte zu ihrem freien Ende hin abnimmt, weil dadurch ein störender Absatz am Ende der Standplatte, der den Liegekomfort des ersten Kindes beeinträchtigen würde, vermieden wird. Die Standplatte erhöht auch insgesamt die Stabilität der Zweitsitz.

In einer anderen Ausführungsform ist die Standplatte gegenüber dem Träger in und/oder entgegen der Fahrtrichtung verlängert, bildet also eine leistenförmige Strebe oder Kufe. Dadurch stützt sich die Standplatte an der vorderen oder der hinteren Stirnwand des Kinderwagens bei Beschleunigungen oder Verzögerungen ab, so dass ein Verrutschen des Zweitsitzes innerhalb des Kinderwagens vermieden wird.

Die Enden der verlängerten Standplatte können nach innen zu gekrümmt oder verjüngt verlaufen, um sich noch besser an einen gerundeten Übergang zwischen den Seitenwänden und den Stirnwänden anzupassen.

Für eine bessere Steifigkeit kann diese Variante der Standplatte auch senkrecht zur Sitzfläche ausgerichtet werden.

Die Sitzfläche des Zweitsitz kann gepolstert oder zusätzlich ergonomisch für das zu transportierende zweite Kind ausgeformt sein. Weitere Ausstattungsvarianten des Zweitsitzes sind eine Rückenlehne, ein Haltegriff oder eine weitere Seitenwand. An dem Zweitsitz kann auch ein Gurt zum Sichern des zweiten Kindes angebracht sein.

In einer interessanten Ausführungsform sind die Träger und die Sitzfläche aus elastischem Material geformt, so dass die Distanz zwischen den unteren Enden der Träger zwischen etwa 80 und 105% der Breite der Sitzfläche variiert werden kann. Mit dieser Flexibilität kann die Zweitsitz an voneinander abweichende Breiten verschiedener Kinderwagenmodelle besser angepasst werden.

In diesem Fall ist keine exakte Anpassung der Breite der Sitzfläche an die Breite der Liegefläche des Kinderwagens erforderlich. Dennoch ist es natürlich denkbar, für unterschiedlich breite Ausführungen von Kinderwagen verschiedene Größen von Zweitsitzen zu fertigen.

Als eine weitere Variante kann der Zweitsitz in einen Sitzbereich, auf dem das zweite Kind sitzt, und in mindestens einen Lagerbereich aufgeteilt werden, der zum leichten Transport von z.B. mitgeführten Kleinteilen, wie Spielzeugen, Fläschchen usw. dient. Dieser Lagerbereich kann z.B. als von der Sitzfläche aus nach unten verlaufende Vertiefung ausgebildet werden und in einer weiteren Variante durch einen Deckel verschlossen werden. Außerdem kann in den Lagerbereich ein herausnehmbarer Transportbehälter eingesetzt werden.

In einer weiteren Variante ist wenigstens einer der Träger als ein Traghohlkörper ausgebildet ist, in den zu transportierende Gegenstände einbringbar sind. Möglich sind u.a. ein Ständer für lange, runde Gegenstände wie z.B. einen Regenschirm oder ein Ablagefach für plattenförmige Gegenstände wie z.B. Zeitungen.

Zusätzlich können die Seiten des Zweitsitzes Haken oder andere Befestigungselemente zur temporären Aufnahme von Handtaschen, Einkaufstüten, Kleidungsstücken oder anderen Gegenständen aufweisen.

Als eine weitere Ausstattungsvariante sind an dem Zweitsitz zusätzliche, flächige Elemente als Schutz gegen Niederschläge oder Sonnenstrahlen ansteckbar oder von dem Zweitsitz ausschwenkbar oder ausziehbar.

An die Unterseite der Zweitsitz können Spielgeräte oder andere Hilfsmittel oder entsprechende Halterungen zur Nutzung durch das erste Kind angebracht werden.

Der etwa U-förmige Grundkörper eines erfindungsgemäßen Zweitsitzes kann in der besonders einfachen Basisversion mit fest an der Sitzfläche angeformten Trägern besonders wirtschaftlich in großen Stückzahlen hergestellt werden, wenn er als ein Stück gegossen, gespritzt, aufgeschäumt, gebogen oder gepresst wird.

Natürlich ist auch eine mehrteilige Fertigung möglich. Zum Beispiel können Sitzfläche und beide Träger als Einzelteile an den Endverbraucher geliefert werden, der Sie erst bei konkretem Bedarf zusammensteckt. Nach dem Gebrauch kann er die Teile wieder auseinander nehmen und platzsparend verstauen.
In dieser Variante ist auch eine einfache Anpassung an verschieden breite Kinderwagen möglich, z.B. durch mehrere, gleichartige Befestigungsmöglichkeiten für die Träger in der Sitzfläche, von denen jeweils nur ein Paar gleichzeitig genutzt wird und die übrigen - mit anderen Abständen zueinander - erst in einem Kinderwagen mit deutlich anderer Breite genutzt werden.

Ein Zweitsitz lässt sich an verschiedene Breiten der Kinderwägen alternativ durch das Verschieben oder die Verschwenkung von wenigstens einem Träger gegenüber der Sitzfläche anpassen. Dabei kann die Schwenkachse parallel zur Sitzfläche ausgerichtet sein. Zur Anpassung an verschiedene Breiten werden die Träger in verschiedene Winkel geschwenkt und in dieser Stellung fixiert, z.B. durch eine ebenfalls abklappbare und ggf. einrastbare Strebe.

Wenn die Schwenkachse vertikal zur Sitzfläche orientiert ist, kann zwischen Träger und Verschwenkachse noch ein Ausleger angeordnet werden, so dass Träger und Ausleger ein L-förmiges Bauteil bilden. Zur Verstellung des Abstandes zwischen den beiden Trägern wird dann wenigstens ein Ausleger parallel zur Sitzfläche verschwenkt.

Im Folgenden sollen weitere Einzelheiten und Merkmale der Erfindung anhand von Beispielen näher erläutert werden. Diese sollen die Erfindung jedoch nicht einschränken, sondern nur erläutern. Es zeigt in schematischer Darstellung:
- Figur 1: Perspektivische Ansicht eines Kinderwagens mit Zweitsitz, teilweise zeichnerisch aufgeschnitten
- Figur 2: Einzelheit der gelenkigen Verbindung zwischen Sitzfläche und Träger
- Figur 3: Zweitsitz mit zusätzlichem Lagerbereich

### Die Figuren zeigen im Einzelnen:

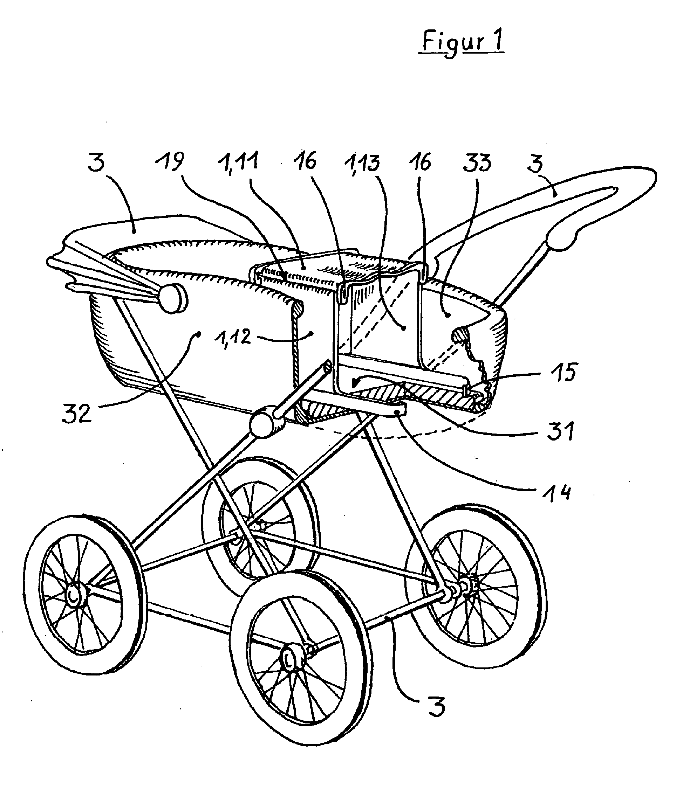

In **Figur 1** ist perspektivisch ein Kinderwagen (3) dargestellt, der teilweise zeichnerisch aufgeschnitten ist, um zu zeigen, wie sich der Zweitsitz (1) auf der Liegefläche (31) in den korbartigen Oberteil des Kinderwagens (3) einfügt und wie er dort mit den Standplatten (14) und (15) gegen ein Verrutschen in Fahrtrichtung gesichert werden kann.

Die in Figur 1 dargestellte Ausführungsform eines Kinderwagens (3) entspricht dem aktuellen Stand der Technik mit einer sehr filigranen Stützkonstruktion aus Metallprofilen. Diese Bauweise wird derzeit vor allem deshalb bevorzugt, weil die Mehrzahl aller Kinderwagen zusammenklappbar ist. Die Gelenke, Verschlüsse und anderen Einzelheiten einer solchen Klappfunktion werden in Figur 1 der Übersichtlichkeit halber jedoch nicht dargestellt, sondern nur die bei der Mehrzahl der üblichen Kinderwagenkonstruktionen vorhandenen Streben gezeichnet.

Fast allen Konstruktionen gemeinsam ist, dass die Liegefläche (31) von Seitenwänden umgeben ist. In Figur 1 sind die beiden Seitenwände (32) und (33) auf der in Fahrtrichtung linken und rechten Seite des Kinderwagens (3) besonders gekennzeichnet: die erste Seitenwand (32) ist teilweise zeichnerisch weg geschnitten und gibt dadurch den Blick auf den Zweitsitz (1) frei.

Deutlich zu erkennen ist, dass der Zweitsitz (1) aus der etwa horizontalen Sitzfläche (11) besteht, an die sich der erste Träger 12 und der zweite Träger (13) anschließen. In der gezeichneten Ausführungsform sind die Träger (12) und (13) gelenkig an den Kanten der Sitzfläche (11) befestigt. Im hier dargestellten, aktivierten Zustand des Zweitsitzes (1) verlaufen die Träger (12, 13) von der Kante der Sitzfläche (11) aus senkrecht nach unten bis zur Liegefläche (31).

In der präsentierten Ausführungsform berühren die Träger (12, 13) die Liegefläche (31) jedoch nicht direkt, sondern über jeweils eine Standplatte (14, 15), die in der hier dargestellten Variante jeweils kufenartig über die Träger (12, 13) hinaus verlängert sind. In der gezeichneten Variante sind die Standplatten (14,15) so lang, dass sie an die beiden stirnseitigen Seitenwände des Kinderwagens (3) angrenzen.

Für eine optimale Anpassung an den leicht gekrümmten Übergang zwischen den Seitenwänden (32,33) und den Stirnseiten verjüngen sich die Standplatten (14,15) zum Ende hin und sind etwas einwärts gebogen. Dadurch wird auch bei abrupten Verzögerungen oder Beschleunigungen ein Umkippen des Zweitsitzes (1) verhindert. Durch die Abstützung gegen die vordere und rückwärtige Stirnfläche mittels der nach innen gebogenen Enden der beiden Standplatten (14, 15) wird auch ein Verrutschen des Zweitsitzes (1) auf der Liegefläche (31) nachhaltig verhindert.

In Figur 1 ebenfalls gut nachvollziehbar ist, dass sich die beiden Träger (12, 13) des Zweitsitzes (1) an die jeweils benachbarte Seitenwand (32, 33) des Kinderwagens (3) anlehnen und dagegen abstützen. Durch diese seitliche Abstützung wird der Zweitsitz (1) weiter stabilisiert.

Zusätzlich hilfreich ist diese seitliche Abstützung dann, wenn - wie in Figur 1 ausgeführt - die Träger (12, 13) gelenkig an der Sitzfläche (11) befestigt sind. Dann ist nämlich ein Verschwenken der beiden Träger (12, 13) nach außen hin durch die beiden Seitenwände (32, 33) blockiert. Erst wenn der Zweitsitz (1) aus dem Kinderwagen (3) herausgenommen wird, lassen sich die beiden Träger (12, 13) seitlich weg klappen und bis auf die Oberseite der Sitzfläche (11) verschwenken.

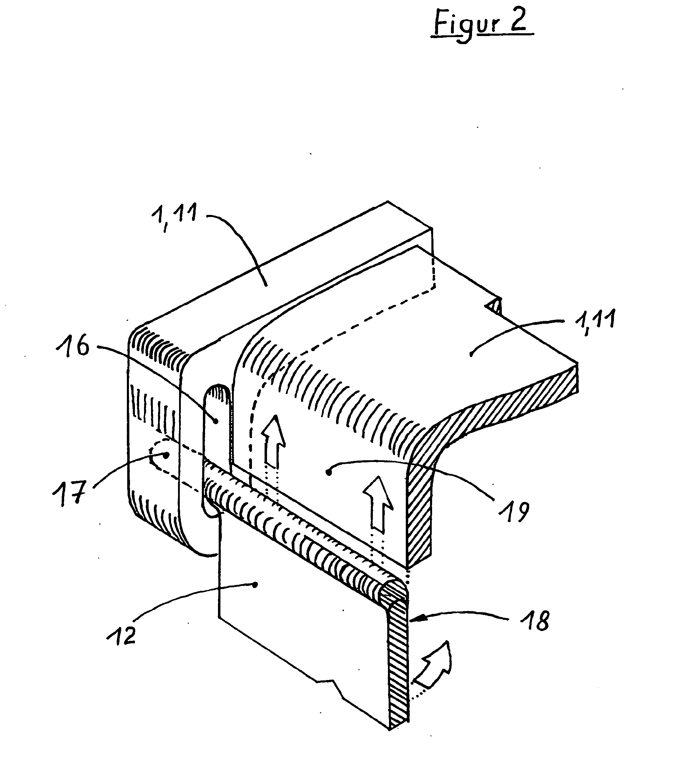

In Figur 2 ist ein Ausführungsbeispiel für die gelenkige Verbindung zwischen der Sitzfläche (11) und einem Träger (12) gezeigt. Diese gelenkige Verbindung dient zugleich als Feststeller im aktivierten Zustand, wenn nämlich der Träger (12) von der Sitzfläche (11) aus nach unten weist. Dazu ist an der Oberkante des Trägers (12) die Rundachse (17) befestigt, die über den Träger (12) seitlich hinaus ragt und mit diesem Stück in das Langloch (16) hinein ragt, welches in die Sitzfläche (11) integriert ist.

In der gezeichneten Ausführungsform ist zur Verbindung mit dem Träger (12) an die in Fahrtrichtung weisenden Kanten der Sitzfläche (11) je ein Versteifungselement angeformt, dass an seinen Enden abgewinkelt ist und ein Langloch (16) enthält, das senkrecht zur Oberfläche der Sitzfläche (11) ausgerichtet ist.

In Figur 2 ist gut erkennbar, dass das Langloch (16) parallel zur Auflagefläche (19) orientiert ist, die durch "Abwinkeln" der Sitzfläche (11) geformt ist. Komplementär zur Auflagefläche (19) ist die Führungsfläche (18) am Träger (12) ausgebildet, die bei vertikalem Verschieben der Rundachse (17) in den oberen Bereich des Langloches (16) auf der Auflagefläche (19) aufliegt und dadurch den Träger (12) daran hindert, an die Unterseite der Sitzfläche (11) zu verschwenken. Diese vertikale Verschiebebewegung ist in Figur 2 durch zwei große Pfeile auf der Auflagefläche (19) dargestellt.

In der in Figur 2 eingezeichneten Position der Rundachse (17) im Langloch (16) kann der Träger (12) soweit verschwenkt werden, bis er an die Unterseite der Sitzfläche (11) anstößt, was durch einen gekrümmten Doppelpfeil am unteren Ende der Figur 2 dargestellt ist.

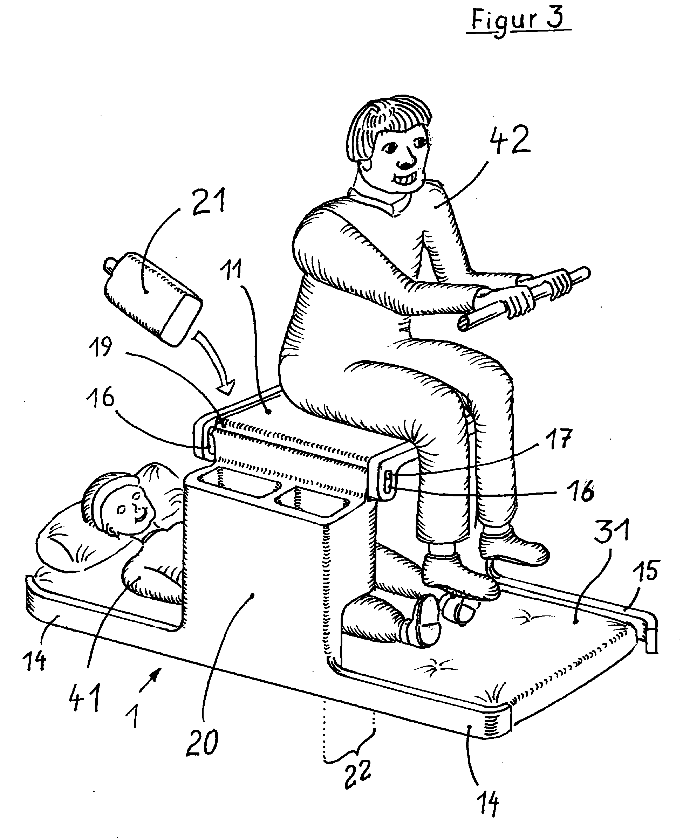

In **Figur 3** ist als Schrägbild eine Variante des Zweitsitzes (1) dargestellt, in der der erste Träger (12) als Traghohlkörper (20) ausgeführt ist. Er bildet in dieser Variante den Lagerbereich (22) des Zweitsitzes (1) und enthält zwei Vertiefungen zur Aufnahme von Gegenständen, wie z. B. dem Transportbehälter (21), der in der gezeichneten Variante passgenau in den Traghohlkörper (20) einsteckbar ist.

In Figur 3 ist nachvollziehbar, dass der Traghohlkörper (20) mit einer zusätzlichen Isolierung versehen werden kann, die z.B. das längere Aufbewahren von gekühlten oder erhitzten Getränken zur Versorgung der Kinder (41, 42) im Transportbehälter (21) ermöglicht.

In Figur 3 ist eine gelenkige Verbindung zwischen der Sitzfläche (11) und dem Traghohlkörper (20) gezeigt. Bei Nichtgebrauch des Zweitsitzes (1) kann also der Traghohlkörper (20) an die Unterseite der Sitzfläche (11) heran geschwenkt werden.

In Figur 3 ist nochmals die stabilisierende Funktion der beiden Standplatten (14, 15) nachvollziehbar. Sie umranden in diesem Ausführungsbeispiel die Liegefläche (31), die hier mit einer Matratze belegt ist. Durch die beiden Standplatten (14, 15) wird der Zweitsitz (1) am Verrutschen und am Kippen gehindert.

In Figur 3 sind die Positionen des ersten Kindes (41) auf der Liegefläche (31) und des zweiten Kindes (42) auf der Sitzfläche (11) gezeigt. Dabei wird sehr schön deutlich, dass der Bewegungsraum des ersten Kindes (41) durch den Zweitsitz (1) kaum eingeschränkt ist.

Deutlich wird auch, dass das zweite Kind (42) oben auf der Sitzfläche (11) keinen Sichtkontakt mit dem ersten Kind (41) hat, wodurch Interaktionen der beiden Kinder untereinander höchst unwahrscheinlich werden.

Einzig die in Figur 3 herunterhängenden Unterschenkel des zweiten Kindes (42) könnten eventuell mit den Füßen des ersten Kindes (41) in Kontakt kommen. Um diesen Kontakt zu vermeiden, kann der Zweitsitz (1) so nahe an die rückwärtige Stirnkante der Liegefläche (31) herangerückt werden, dass die Unterschenkel des zweiten Kindes (42) über die rückwärtige Stirnwand des Kinderwagens (3) heraus hängen. Siehe dazu auch Figur 1, denn nur dort ist die rückwärtige Stirnwand des Kinderwagens (3) gezeigt.

In Figur 3 ist nachvollziehbar, dass für die Unterschenkel des zweiten Kindes (42) auch eine Auflage geschaffen werden kann. Diese Funktion übernimmt z. B. der - in Figur 3 nicht gezeichnete - Softsack, der den Zweitsitz 1 umhüllt.

In Figur 3 ist eingezeichnet, wie sich das zweite Kind (42) an einer Stange festhält, die am Schubbügel des Kinderwagens (3) zusätzlich montiert ist.

### Bezugszeichenliste

- 1: Zweitsitz, liegt auf Liegefläche 31 auf
- 11: Sitzfläche, horizontaler Teil des Zweitsitzes 1
- 12: erster Träger des Zweitsitzes 1, an Sitzfläche 11 befestigt, liegt auf Liegefläche 31 auf
- 13: zweiter Träger des Zweitsitzes 1, an Sitzfläche 11 befestigt, liegt auf Liegefläche 31 auf
- 14: erste Standplatte, an der Unterkante des ersten Trägers 12 befestigt, liegt auf Liegefläche 31 auf
- 15: zweite Standplatte, an der Unterkante des zweiten Trägers 13 befestigt, liegt auf Liegefläche 31 auf
- 16: Langloch, in Sitzfläche 11, senkrecht zu dessen Oberfläche
- 17: Rundachse, an Oberkante der Träger 12 und 13, greift in Langloch 16 ein
- 18: Führungsfläche an Träger 12 oder 13, liegt auf Auflagefläche 19 auf Sitzfläche 11 auf
- 19: Auflagefläche, an Sitzfläche 11, Gegenstück zur Führungsfläche 18

- 20: Traghohlkörper, Ausführungsvariante der Träger 12 oder 13
- 21: Transportbehälter, im Lagerbereich 22 integriert
- 22: Lagerbereich des Zweitsitzes 1

- 3: Kinderwagen, enthält die horizontale Liegefläche 31
- 31: Liegefläche, im Kinderwagen 3
- 32: erste Seitenwand des Kinderwagens 3
- 33: zweite Seitenwand des Kinderwagens 3

- 41: erstes Kind, liegt auf Liegefläche 31
- 42: zweites Kind, sitzt auf Sitzfläche 11

## Patentansprüche

1. Kinderwagen (3) mit Zweitsitz (1), wobei
- der Kinderwagen (3) zumindest teilweise eine horizontale, von zwei Seitenwänden (32, 33) begrenzte Liegefläche (31) zur Aufnahme eines ersten Kindes (41) aufweist, und
- der Zweitsitz (1) aus einer etwa horizontal verlaufenden Sitzfläche (11) und wenigstens zwei Trägern (12, 13) besteht, die
- an zwei gegenüberliegenden Kanten der Sitzfläche (11) befestigt, sich im aktivierten Zustand etwa rechtwinklig zur Sitzfläche ausgerichtet auf beiden Seiten des ersten Kindes (41) nach unten bis zur Liegefläche (31) erstrecken und
- auf dieser aufliegen,
**dadurch gekennzeichnet, dass** die Träger (12, 13)
- an die Kanten der Sitzfläche (11) angelenkt sind und
- im aktivierten Zustand durch einen Feststeller gegen ein Verschwenken in deaktivierte Position gesichert sind, und dass die Träger (12, 13)
- im deaktivierten Zustand auf die Oberseite oder auf die Unterseite der Sitzfläche (11) verschwenkbar sind.

2. Kinderwagen (3) mit einem Zweitsitz (1) nach dem vorhergehenden Anspruch 1, **dadurch gekennzeichnet, dass** als Feststeller für die Träger (12, 13)
- je ein an der Sitzfläche (11) angeformter Anschlag vorgesehen ist, mit denen die Träger (12, 13) gegen ein weiteres Verschwenken in Richtung zur Mitte der Sitzfläche (11) blockiert werden.

3. Kinderwagen (3) mit einem Zweitsitz (1) nach Anspruch 1, **dadurch gekennzeichnet, dass** als Feststeller für die Träger (12, 13) an zwei gegenüberliegenden Kanten der Sitzfläche (11) wenigstens je ein etwa senkrecht zur Sitzfläche (11) ausgerichtetes Langloch (16) vorgesehen ist, in die eine an der Oberkante jedes Trägers (12, 13) befestigte Rundachse (17) greift, die
- im unteren Bereich des Langloches (16) als Verschwenkachse für den Träger (12, 13) dient und
- im oberen Bereich des Langloches (16) als Gegenhalterung für eine Führungsfläche (18) am Träger (12, 13) dient, die auf einer Auflagefläche (19) an der Sitzfläche (11) aufliegt und dadurch eine Verschwenkung des jeweiligen Trägers (12, 13) in den Kinderwagen (1) hinein blockiert.

4. Kinderwagen (3) mit einem Zweitsitz (1) nach dem vorhergehenden Anspruch 1, **dadurch gekennzeichnet, dass** als Feststeller für die Träger (12, 13)
- ein aus einem Träger (12, 13) herausschwenkbares Dreieck, das mit einer Kante an der Unterseite der Sitzfläche (11) anliegt oder
- ein Rasthaken oder ein Hebel, der in ein dazu komplementäres Gegenstück einrastet oder
- ein Splint oder eine Gabel oder ein Innensechskant oder anderes Blockierelement, das in eine dazu komplementäre axial ausgerichtete Öffnung in der Rundachse (17) an der Oberkante eines Trägers (12, 13),
dient.

5. Kinderwagen (3) mit einem Zweitsitz (1) nach dem vorhergehenden Anspruch 1, **dadurch gekennzeichnet, dass** als Feststeller für die Träger (12, 13) an wenigstens einem der Träger (12, 13)
- ein Hebel verschwenkbar angebracht ist, der im aktivierten Zustand so weit verschwenkt wird, dass er
- mit einem Ende auf einer Andruckfläche unterhalb der Sitzfläche (11) aufliegt oder
- in einen Schlitz in der Sitzfläche (11) eingreift und
- bei deaktivierten Träger (12, 13) die Andruckfläche oder den Schlitz nicht berührt.

6. Kinderwagen (3) mit einem Zweitsitz (1) nach einem der vorhergehenden Ansprüche 1 bis 5, **dadurch gekennzeichnet, dass** die Sitzfläche (11) und die Träger (12, 13) jeweils aus etwa plattenförmigen Material bestehen.

7. Kinderwagen (3) mit einem Zweitsitz (1) nach einem der vorhergehenden Ansprüche, **dadurch gekennzeichnet, dass** die Distanz zwischen den oberen Enden der Träger (12, 13) 70% bis 100% der Breite der Liegefläche (31) entspricht und diese aus einem dauerhaft elastischem Material geformt soweit verformbar ist, dass die Distanz zwischen ihren unteren Enden
- zwischen 80 und 105% der Breite der Sitzfläche (11) des Kinderwagens (3) variierbar und durch einen Gurt oder ähnliches fixierbar ist.

8. Kinderwagen (3) mit einem Zweitsitz (1) nach einem der vorhergehenden Ansprüche 1 bis 7, **dadurch gekennzeichnet, dass** an der Unterkante wenigstens eines Trägers (12, 13) wenigstens
- ein Gurt und/oder
- eine Kette und/oder
- ein Seil
befestigt ist, welche(r,s) jeweils in der Länge verstellbar ist und an ihrem freien Ende ein Haken oder eine Schnalle oder ein Klettverschluss oder ein ähnliches Befestigungselement zur Befestigung am Kinderwagen (3) oder am anderen Träger (13, 12) angebracht ist.

9. Kinderwagen (3) mit einem Zweitsitz (1) nach einem der vorhergehenden Ansprüche, **dadurch gekennzeichnet, dass** die Sitzfläche (11)
- gepolstert ist und/oder
- ergonomisch als Sitzfläche für das zweites zu transportierendes Kind (42) ausgebildet ist.

10. Kinderwagen (3) mit einem Zweitsitz (1) nach einem der vorhergehenden Ansprüche 1 bis 9, **dadurch gekennzeichnet, dass** auf der Liegefläche (31)
- eine Softtasche zum Einlegen des ersten Kindes (41) ausgebreitet ist,
- in welche dann der aktivierte Zweitsitz (1) das erste Kind (41) zu einem Teil tunnelartig überdeckt, und
- welche dann oberhalb des Zweitsitzes (1) verschließbar ist.

11. Kinderwagen (3) mit einem Zweitsitz (1) nach Anspruch 10, **dadurch gekennzeichnet, dass** in die Softtasche
- eine Polsterung eingearbeitet ist, die nach dem Verschließen der Softtasche auf der Sitzfläche (11) aufliegt und/oder
- Befestigungen für einen Haltegurt zum Angurten des zweiten Kindes (42) integriert sind.

12. Kinderwagen (3) mit einem Zweitsitz (1) nach einem der vorhergehenden Ansprüche 1 bis 11, **dadurch gekennzeichnet, dass** an der Sitzfläche (11) eine Rückenlehne und/oder wenigstens ein Haltegriff und/oder ein Haltegurt und/oder eine Unterschenkelauflage für das zweite, zu transportierende Kind (42) angebracht ist.

13. Kinderwagen (3) mit einem Zweitsitz (1) nach einem der vorhergehenden Ansprüche 1 bis 12, **dadurch gekennzeichnet, dass** die Sitzfläche (11) aufgeteilt ist in einen Sitzbereich, auf dem ein zweites Kind (42) sitzen kann, und in mindestens einen Lagerbereich (22), der eine von der Sitzfläche (11) aus nach unten verlaufende Vertiefung aufweist und/oder in den ein herausnehmbarer Transportbehälter (21) einsetzbar ist und/oder wenigstens einer der Träger (12, 13) als ein Traghohlkörper (20) ausgebildet ist, in den zu transportierende Gegenstände einbringbar sind.

14. Kinderwagen (3) mit einem Zweitsitz (1) nach einem der vorhergehenden Ansprüche 1 bis 13, **dadurch gekennzeichnet, dass** an den Zweitsitz (1) zusätzliche, flache Elemente als Schutz gegen Niederschläge oder Sonnenstrahlen ansteckbar oder vom Zweitsitz (19) ausschwenkbar oder ausziehbar sind und/oder Spielgeräte oder andere Hilfsmittel oder entsprechende Halterungen zur Nutzung durch das erste Kind (41) angebracht sind und/oder seitliche Haken oder andere Befestigungselemente zur temporären Aufnahme von Handtaschen, Einkaufstüten, Kleidungsstücken oder anderen Gegenständen befestigt sind.

15. Kinderwagen (3) mit einem Zweitsitz (1) nach einem der vorhergehenden Ansprüche 1 bis 14, **dadurch gekennzeichnet, dass** an der Unterkante beider Träger (12, 13) jeweils eine Standplatte (14, 15) angebracht ist, die entweder parallel zur Sitzfläche (11) ausgerichtet ist und in das Innere des Kinderwagens (3) weist und deren Dicke zu ihrem freien Ende hin abnimmt, oder senkrecht zur Sitzfläche (11) ausgerichtet ist und gegenüber dem Träger (12, 13) in und/oder entgegen zur Fahrtrichtung des Kinderwagens (3) verlängert sein kann und an wenigstens einem Ende entsprechend zur Form der vorderen oder rückwärtigen Stirnwand des Kinderwagens in den Innenraum hinein gekrümmt sein kann.

## Claims

1. A stroller (3) comprising a second seat (1), wherein
- the stroller (3) at least partially encompasses a horizontal lying surface (31), which is delimited by two side walls (32, 33), for accommodating a first child (41), and
- the second seat (1) consists of a seating surface (11), which runs approximately horizontally and which consists of at least two supports (12, 13), which,
- being fastened to two opposite edges of the seating surface (11), extend downwards in the activated state to the lying surface (31) oriented approximately at right angles to the seating surface on both sides of the first child (41) and
- bear on said lying surface (31),
**characterized in that** the supports (12, 13)
- are articulated on the edges of the seating surface (11) and,
- in the activated state, are secured against pivoting into deactivated position by means of a locking device and that the supports (12, 13),
- in the deactivated state, can be pivoted onto the upper side or onto the bottom side of the seating surface (11).

2. The stroller (3) comprising a second seat (1) according to the preceding claim 1, **characterized in that**, as locking device for the supports (12, 13),
- provision is in each case made for a stop, which is integrally moulded to the seating surface (11) and by means of which the supports (12, 13) are blocked against a further pivoting in the direction of the centre of the seating surface (11).

3. The stroller (3) comprising a second seat (1) according to claim 1, **characterized in that**, as locking device for the supports (12, 13), provision is in each case made on two opposite edges of the seating surface (11) for at least one elongated hole (16), which is oriented approximately perpendicular to the seating surface (11) and with which a rotational axis (17), which is fastened to the upper edge of each support (12, 13), engages, said rotational axis (17)
- serving as pivot axis for the support (12, 13) in the lower area of the elongated hole (16) and
- serving as counter holding element for a guide surface (18) on the support (12, 13) in the upper area of the elongated hole (16), which rests on a bearing surface (19) on the seating surface (11) and which thus blocks a pivoting of the respective support (12, 13) into the stroller (1) through this.

4. The stroller (3) comprising a second seat (1) according to the preceding claim 1, **characterized in that**
- a triangle, which can be pivoted out of a support (12, 13) and which rests against the bottom side of the seating surface (11) with one edge or
- an engagement hook or a lever, which engages with a counter piece, which is complementary thereto, or
- a cotter pin or a bracket or an internal hexagon or another blocking element, which engages with an opening in the rotational axis (17), which is complementary thereto and which is oriented axially, on the upper edge of a support (12, 13),
serves as locking device for the supports (12, 13).

5. The stroller (3) comprising a second seat (1) according to the preceding claim 1, **characterized in that**, as locking device for the supports (12, 13) to at least one of the supports (12, 13)
- a lever is pivotably attached, which, in the activated state, is pivoted to the extent that it
- rests with one end on a contact surface below the seating surface (11) or
- engages with a slit in the seating surface (11) and
- does not contact the contact surface or the slit when the supports (12, 13) are deactivated.

6. The stroller (3) comprising a second seat (1) according to one of the preceding claims 1 to 5, **characterized in that** the seating surface (11) and the supports (12, 13) in each case consist of an approximately plate-shaped material.

7. The stroller (3) comprising a second seat (1) according to one of the preceding claims, **characterized in that** the distance between the upper ends of the supports (12, 13) corresponds to between 70% and 100% of the width of the lying surface (31) and that, being formed of a permanently elastic material, said lying surface (31) can be deformed to the extent that the distance between its lower ends
- can be varied between 80 and 105% of the width of the seating surface (11) of the stroller (3) and can be fixed by means of a belt or the like.

8. The stroller (3) comprising a second seat (1) according to one of the preceding claims 1 to 7, **characterized in that** at least
- a belt and/or
- a chain and/or
- a rope,
which can in each case be adjusted in length and to the free end of which a hook or a buckle or a hook-and-loop fastener or a similar fastening element is attached for fastening to the stroller (3) or to the other support (13, 12), is attached to the bottom edge of at least one support (12, 13).

9. The stroller (3) comprising a second seat (1) according to one of the preceding claims, **characterized in that** the seating surface (11) is embodied so as to be
- cushioned and/or
- ergonomically as seating surface for the second child (42), which is to be transported.

10. The stroller (3) comprising a second seat (1) according to one of the preceding claims 1 to 9, **characterized in that**, on the lying surface (31),
- a soft pocket for placing the first child (41) into is spread out,
- into which the activated second seat (1) then partly covers the first child (41) in a tunnel-like manner, and
- which can then be closed above the second seat (1).

11. The stroller (3) comprising a second seat (1) according to claim 10, **characterized in that**
- a cushion, which bears on the seating surface (11) after closing the soft pocket, and/or
- fasteners for a safety belt for buckling up the second child (42)
are incorporated into the soft pocket.

12. The stroller (3) comprising a second seat (1) according to one of the preceding claims 1 to 11, **characterized in that** a back rest and/or at least one grab handle and/or a safety belt and/or a lower leg support for the second child (42), which is to be transported, is attached to the seating surface (11).

13. The stroller (3) comprising a second seat (1) according to one of the preceding claims 1 to 12, **characterized in that** the seating surface (11) is divided into a sitting area, on which a second child (42) can sit, and into at least one storage area (22), which encompasses a depression, which runs downwards, starting at the seating surface (11) and/or into which a removable transport container (21) can be inserted and/or at least one of the supports (12, 13) is embodied as a hollow support structure (20), into which objects, which are to be transported, can be introduced.

14. The stroller (3) comprising a second seat (1) according to one of the preceding claims 1 to 13, **characterized in that** additional, flat elements can be plugged into the second seat (1) or can be pivoted away or extended from the second seat (19) as protection against precipitation or sun rays and/or toys or other auxiliary means or corresponding holders for being used by the first child (41) are attached and/or lateral hooks or other fastening elements are fastened for temporarily accommodating handbags, shopping bags, pieces of clothing or other objects.

15. The stroller (3) comprising a second seat (1) according to one of the preceding claims 1 to 14, **characterized in that** a base plate (14, 15) is in each case attached to the bottom edge of both supports (12, 13), said base plate (14, 15) is either oriented parallel to the seating surface (11) and faces into the interior of the stroller (3) and the thickness thereof decreases towards its free end or is oriented perpendicular to the seating surface (11) and can be extended relative to the support (12, 13) in and/or opposite to the driving direction of the stroller (3) and can be curved into the interior at least on one end in accordance with the shape of the front or rear front wall of the stroller.

## Revendications

1. Landau (3) muni d'un siège auxiliaire (1),
- le landau (3) comportant au moins en partie une surface de couchage (31) horizontale, délimitée par deux parois latérales (32, 33) pour recevoir un premier enfant (41) et
- le siège auxiliaire (1) étant constitué d'une surface d'assise (11) s'étendant approximativement à l'horizontale et d'au moins deux supports (12, 13) qui
- fixés sur deux arêtes opposées de la surface d'assise (11), à l'état activé, en étant orientés approximativement à angle droit par rapport à la surface d'assise, s'étendent sur les deux côtés du premier enfant (41) vers le bas, jusqu'à la surface de couchage (31) et
- reposent sur cette dernière,
**caractérisé en ce que** les supports (12, 13)
- sont articulés sur les arêtes de la surface d'assise (11) et
- à l'état activé, sont bloqués par un arrêt contre un pivotement dans la position désactivée et **en ce que** les supports (12, 13)
- peuvent pivoter, à l'état désactivé sur la face supérieure ou sur la face inférieure de la surface d'assise (11).

2. Landau (3) muni d'un siège auxiliaire (1) selon la revendication précédente 1, **caractérisé en ce qu'**en tant qu'arrêt pour les supports (12, 13)
- il est prévu chaque fois une butée façonnée sur la surface d'assise (11) avec lesquelles on bloque les supports (12, 13) contre un pivotement plus ample en direction du centre de la surface d'assise (11).

3. Landau (3) muni d'un siège auxiliaire (1) selon la revendication 1, **caractérisé en ce qu'**en tant qu'arrêts pour les supports (12, 13), sur deux arêtes opposées de la surface d'assise (11), il est prévu au moins un trou oblong (16) orienté approximativement à la perpendiculaire de la surface d'assise (11), dans lesquels s'engage un axe rond (17) fixé sur l'arête supérieure de chaque support (12, 13) qui
- dans la zone inférieure du trou oblong (16) sert d'axe de pivotement pour le support (12, 13) et
- dans la zone supérieure du trou oblong (16) sert de contre-appui pour une surface de guidage (18) sur le support (12, 13) qui repose sur une surface d'appui (19) sur la surface d'assise (11) et bloque de ce fait un pivotement du support (12, 13) concerné vers l'intérieur du landau (1).

4. Landau (3) muni d'un siège auxiliaire (1) selon la revendication précédente 1, **caractérisé en ce que** fait office d'arrêt pour les supports (12, 13)
- un triangle pouvant pivoter hors d'un support (12, 13) qui par une arête est adjacent à la face inférieure de la surface d'assise (11) ou
- un crochet d'enclenchement ou un levier qui s'enclenche dans une pièce antagoniste qui lui est complémentaire ou
- une goupille fendue ou une fourche ou un six pans creux ou un autre élément de blocage qui s'engage dans un orifice qui lui est complémentaire, orienté en direction axiale dans l'axe rond (17) sur l'arête supérieure d'un support (12, 13).

5. Landau (3) muni d'un siège auxiliaire (1) selon la revendication précédente 1, **caractérisé en ce qu'**en tant qu'arrêt pour les supports (12, 13), sur au moins l'un des supports (12, 13)
- un levier est monté de manière pivotante, que l'on fait pivoter à l'état activé jusqu'à ce que
- par une extrémité, il repose sur une surface de pression en-dessous de la surface d'assise (11) ou
- il s'engage dans une échancrure dans la surface d'assise (11) et
- qui lorsque les supports (12, 13) sont désactivés, n'entre pas en contact avec la surface de pression ou avec l'échancrure.

6. Landau (3) muni d'un siège auxiliaire (1) selon l'une quelconque des revendications précédentes 1 à 5, **caractérisé en ce que** la surface d'assise (11) et les supports (12, 13) sont constitués chacun en un matériau approximativement en forme de plaque.

7. Landau (3) muni d'un siège auxiliaire (1) selon l'une quelconque des revendications précédentes, **caractérisé en ce que** la distance entre l'extrémité supérieure des supports (12, 13) correspond à de 70% à 100% de la largeur de la surface de couchage (31) est **en ce que** cette dernière est façonnée en une matière à élasticité permanente et est déformable jusqu'à ce que la distance entre ses extrémités inférieures
- soit variable entre 80 et 105% de la largeur de la surface d'assise (11) du landau (3) et puisse se fixer par une sangle ou analogue.

8. Landau (3) muni d'un siège auxiliaire (1) selon l'une quelconque des revendications précédentes 1 à 7, **caractérisé en ce que** sur l'arête inférieure d'au moins un support (12, 13), il est fixé au moins
- une sangle et/ou
- une chaîne et/ou
- un câble
lesquels sont chacun réglables en longueur et **en ce que** sur leur extrémité libre est monté un crochet ou une boucle ou une fermeture autoagrippante ou un élément analogue pour la fixation sur le landau (3) ou sur l'autre support (13, 12).

9. Landau (3) avec un siège auxiliaire (1) selon l'une quelconque des revendications précédentes, **caractérisé en ce que** la surface d'assise (11)
- est rembourrée et/ou
- est conçue de manière ergonomique en tant que surface d'assise pour le deuxième enfant (42) à transporter.

10. Landau (3) muni d'un siège auxiliaire (1) selon l'une quelconque des revendications précédentes 1 à 9, **caractérisé en ce que** sur la surface de couchage (31)
- est déployée une nacelle souple pour coucher le premier enfant (41),
- dans laquelle alors le siège auxiliaire (1) activé recouvre en partie le premier enfant (41) à la manière d'un tunnel et
- qui peut alors se refermer au-dessus du siège auxiliaire (1).

11. Landau (3) muni d'un siège auxiliaire (1) selon la revendication 10, **caractérisé en ce que** dans la nacelle souple
- est incorporé un rembourrage, qui après la fermeture de la nacelle souple, repose sur la surface d'assise (11) et/ou
- sont intégrées des fixations pour une ceinture de maintien pour ceinturer le deuxième enfant (42).

12. Landau (3) muni d'un siège auxiliaire (1) selon l'une quelconque des revendications précédentes 1 à 11, **caractérisé en ce que** sur la surface d'assise (11) est monté(e) un dossier et/ou au moins une poignée de maintien et/ou une ceinture de maintien et/ou un repose-jambe pour le deuxième enfant (42) à transporter.

13. Landau (3) muni d'un siège auxiliaire (1) selon l'une quelconque des revendications précédentes 1 à 12, **caractérisé en ce que** la surface d'assise (11) est divisée en une zone d'assise sur laquelle un deuxième enfant (42) peut s'assoir et en au moins une zone de rangement (22), qui comporte une cavité s'étendant à partir de la surface d'assise (11) vers le bas et/ou dans laquelle on peut insérer un contenant de transport (21) amovible et/ou **en ce qu'**au moins l'un des supports (12, 13) est conçu en tant que corps creux porteur (20) dans lequel on peut introduire des objets à transporter.

14. Landau (3) muni d'un siège auxiliaire (1) selon l'une quelconque des revendications précédentes 1 à 13, **caractérisé en ce que** sur le siège auxiliaire (1), on peut attacher des éléments plats supplémentaires, ou les faire pivoter ou les tirer hors du siège auxiliaire (19) pour la protection contre les intempéries ou les rayons solaires et/ou **en ce que** des jouets ou d'autres moyens auxiliaires ou des attaches correspondantes sont monté(e)s pour être utilisé(e)s par le premier enfant (41) et/ou **en ce que** des crochets latéraux ou d'autres éléments de fixation sont fixés pour recevoir temporairement des sacs à main, des cabas, des vêtements ou d'autres objets.

15. Landau (3) muni d'un siège auxiliaire (1) selon l'une quelconque des revendications précédentes 1 à 14, **caractérisé en ce que** sur l'arête inférieure des deux supports (12, 13) est montée chaque fois une plaque de maintien (14, 15) qui soit est orientée à la parallèle de la surface d'assise (11) et dirigée vers l'intérieur du landau (3) et dont l'épaisseur diminue vers son extrémité libre ou qui est orientée à la perpendiculaire de la surface d'assise (11) et qui peut être prolongée par rapport au support (12, 13) et/ou à l'encontre du sens de circulation du landau (3) et qui sur au moins une extrémité peut être recourbée vers l'intérieur, en correspondance avec la forme de la paroi frontale avant ou arrière du u landau.
